# EUROPEAN PATENT APPLICATION

(11) **EP 1 749 910 A1**
(43) Date of publication of application: **07.02.2007**
(21) Application number: 05743569.5
(22) Date of filing: 25.05.2005
(51) Int. Cl.: D02G 1/04, D01H 1/11, F16G 1/08

(54) **BELT FOR YARN TWISTING**

(30) Priority: 25.05.2004 JP 2004154674
(71) Applicant: Nitta Corporation, Osaka-shi, Osaka 556-0022 (JP)
(72) Inventor: UENO, Atsuro, Nitta Corporation, Nara Factory, Nara 6391085 (JP); WAKE, Atsuhito, Nitta Corporation, Nara Factory, Nara 6391085 (JP); TAJIMA, Hiroaki, Nitta Corporation, Nara Factory, Nara 6391085 (JP)
(74) Representative: HOFFMANN EITLE
(86) International application number: PCT/JP2005/009513
(87) International publication number: WO 2005/116313

(57) **Abstract**

A yarn twisting belt formed in an endless loop that ensures longer service life of the belt and stable quality of the yarn, comprising a surface rubber layer 1 that touches yarn to be twisted and a reinforcing layer 2 that is laminated on the surface rubber layer 1, having an intermediate woven fabric 3 provided on the surface rubber layer 1 side of the reinforcing layer 2 while a seamless woven fabric is used as the intermediate woven fabric 3. The seamless woven fabric is elastic in the direction of the belt circumference and rigid in the direction of the belt width. The reinforcing layer 2 comprises the intermediate woven fabric 3 that is constituted from the seamless woven fabric, a core layer 4 constituted from core yarns embedded in the longitudinal direction of the belt, and an external woven fabric 5 that is put on pulleys, while being integrated with the surface rubber layer.

## Description

### [Technical Field]

The present invention relates to a yarn twisting belt used in a twisting machine for synthetic yarn, particularly to a yarn twisting belt for false twisting of yarns by nipping the yarns between two yarn twisting belts that run in opposite directions while crossing each other.

### [Background of the Invention]

A yarn twisting belt is generally constituted from a surface rubber layer that touches the yarn to be twisted and a reinforcing layer that is laminated on the surface rubber layer so as to reinforce the surface rubber layer, and is formed in an endless loop. The reinforcing layer comprises an intermediate woven fabric placed on the surface rubber layer side, a core layer having core yarns that render tensile strength to the belt and are embedded therein in the direction of the belt circumference, and an external woven fabric that are put on pulleys (refer to, for example, Patent Document 1). The woven fabrics provided on both sides of the core layer protect the core layer from breakage along the core yarns.

When the yarn twisting belt is used to twist synthetic yarns, two yarn twisting belts are stretched and put around a pair of pulleys and caused to run in opposite directions while crossing each other, thereby to nip the yarns between opposing surfaces of the two yarn twisting belts and carry out false twisting.

However, with an apparatus that uses the conventional yarn twisting belt as described above, there is such a problem that the belt undergoes significant vibration (large amplitude) while running, thus resulting in oscillation of yarns on the belt surface. This results in uneven wear of the belt and localized heating of the belt leading to scorching thereof, thus reducing the service life of the belt. The oscillation of yarns also causes uneven twisting, and yarns that have been subjected to false twisting are likely to fluff, thus resulting in unstable quality of yarn.

Patent Document 2 proposes the use of a knitted fabric as an intermediate ground cloth interposed between a surface rubber layer and a core layer that includes core yarns embedded therein, in order to make it easier to manufacture the yarn twisting belt. This is based on the fact that the knitted fabric is highly elastic and makes it easier to put the ground cloth over the outside of the reinforcing layer. However, since the knitted fabric has lower rigidity than a woven fabric and is higher in elasticity, there has been a problem of the belt undergoing significant concave warping.

Generally, when the yarn twisting belt undergoes significant concave warping, since the yarns are caused to be nipped by the belt on the edge thereof, such a problem occurs as the yarn is caught by the edge and scuffed. This results in such problems as the generation of a large quantity of waste yarn, breakage of yarns and lower quality of yarn.
When the yarn twisting belt undergoes significant convex warping, on the other hand, the yarns tend to be nipped near the center of the belt, thus resulting in unstable nipping of the yarn. This results in such problems as oscillation of yarns on the belt surface, uneven wear of the belt, scorching of the belt due to localized heating thereof, reduced service life of the belt and uneven twisting.
[Patent Document 1] Japanese Unexamined Patent Publication (Kokai) No. 2002-13033
[Patent Document 2] Japanese Patent Publication No. 3,189,698

### [Disclosure of the Invention]

### [Problems to be Solved by the Invention]

Main object of the present invention is to provide a yarn twisting belt that allows it to suppress vibration of the belt while running and suppress oscillation of yarns from occurring on the belt surface.
Another object of the present invention is to provide a yarn twisting belt that is capable of stable nipping of yarns by improving the belt with regard to warping.

### [Means for Solving the Problems]

The present inventors conducted researches on the cause of vibration of the twisting machine when the belt runs. Through these researches, the inventors found that thickness of the yarn twisting belt of the prior art becomes uneven at the position of seam of an intermediate woven fabric, and that this causes the belt to vibrate at the natural frequency thereof which, due to the relation between this frequency and the natural frequency of the machine, results in significant vibration of the belt that causes oscillation of yarns. Thus the inventors further found it that, when a seamless woven fabric is used as the intermediate ground cloth, thickness of the belt becomes uniform in the direction of the belt circumference, thereby making it possible to suppress the belt from vibrating when running, and solve the problem of significant warp of the belt, thus completing the present invention.

Thus the yarn twisting belt of the present invention comprises a surface rubber layer that touches the yarn to be twisted and a reinforcing layer that is laminated on the surface rubber layer, and is formed in an endless loop with an intermediate woven fabric placed on the surface rubber layer side of the reinforcing layer, wherein the intermediate woven fabric is a seamless woven fabric.
The reinforcing layer is composed of the intermediate woven fabric constituted from the seamless woven fabric, a core layer having core yarns embedded in the longitudinal direction of the belt and an external woven fabric that is put on pulleys, and is integrated with the surface rubber layer.

The seamless woven fabric preferably has elasticity in direction of the belt circumference and has rigidity in the direction of the belt width. Specifically, it is preferable that the seamless woven fabric is woven from elastic yarns and non-elastic yarns, with the elastic yarns running mostly in the direction of the belt circumference and non-elastic yarns running in the direction of the belt width.

The yarn twisting belt that employs the seamless woven fabric warps in such a concave shape as the surface of the surface rubber layer shows 0 to 0.1 mm of warp. Specifically, the ratio of the amount of warp to the belt width, (amount of warp)/(belt width) is preferably in a range from 0 to 0.0125.

### [Effect of the Invention]

Since the yarn twisting belt of the present invention has uniform thickness throughout the length thereof along the direction of the belt circumference due to the use of the seamless woven fabric as the intermediate woven fabric, vibration can be suppressed when the belt runs. As a result, oscillation of yarns on the belt surface can be reduced, uneven wear of the belt and scorching due to localized heating of the belt can be prevented from occurring, service life of the belt can be elongated and quality of twisting can be improved.
The sandwich structure of the intermediate woven fabric (seamless woven fabric)/core yarn/external woven fabric gives higher rigidity against bending to the reinforcing layer.

Use of the seamless woven fabric constituted from elastic yarns and non-elastic yarns woven together, with mostly the elastic yarns running in the direction of the belt circumference and mostly the non-elastic yarns running in the direction of the belt width, makes the rigidity in the direction of the belt width higher so that the belt can be suppressed from warping. As a result, since yarns can be nipped over a wider region of the belt and stable nipping of yarns can be achieved, there are such effects as uneven wear of the belt and scorching due to localized heating of the belt are eliminated and the quality of twisting is stabilized.

### [Brief Description of the Drawings]

[Fig. 1] a sectional view of a yarn twisting belt according to one embodiment of the present invention.
[Fig. 2] a partial front view showing yarns being twisted with an apparatus using the yarn twisting belt.
[Fig. 3] a schematic diagram showing a vibration measuring instrument.
[Fig. 4] a sectional view of a yarn twisting belt according to Example.
[Fig. 5] a sectional view of a yarn twisting belt according to Comparative Example 2.

### [Description of Reference Numerals]

- B:: Yarn twisting belt
- 1:: Surface rubber layer
- 2:: Reinforcing layer
- 3:: Intermediate woven fabric
- 4:: Core layer
- 5:: External woven fabric

### [Best Mode for Carrying Out the Invention]

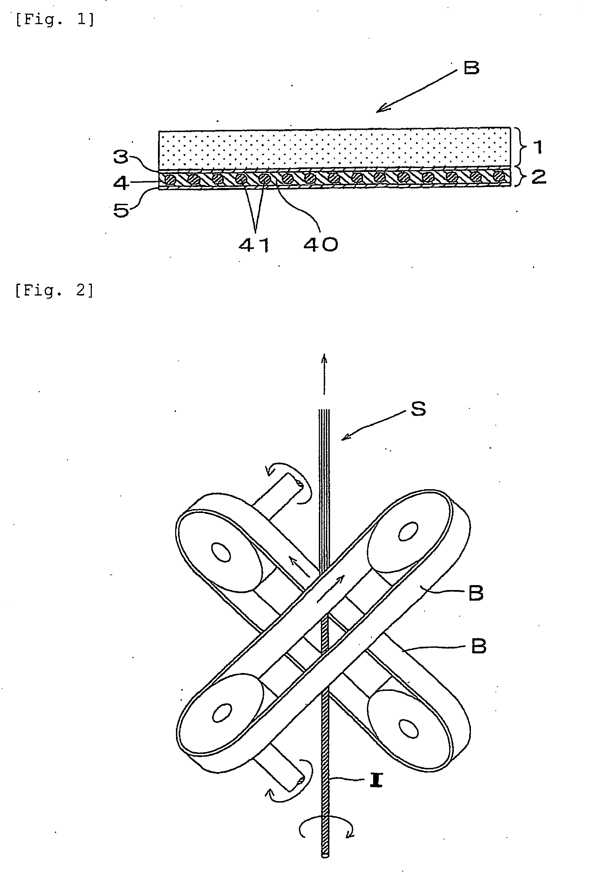

One embodiment of the yarn twisting belt of the present invention will be described in detail with reference to the accompanying drawings. Fig. 1 is a sectional view of the yarn twisting belt according to this embodiment. As shown in Fig. 1, the yarn twisting belt B comprises a surface rubber layer 1 and a reinforcing layer 2 laminated thereon.

The reinforcing layer 2 comprises an intermediate woven fabric 3, a core layer 4 constituted from rubber 40 and core yarns 41, and an external woven fabric 5 that is put on pulleys. In other words, the core layer 4 is interposed between the intermediate woven fabric 3 and the external woven fabric 5. The yarn twisting belt B is formed in an endless loop with the surface rubber layer 1 facing the outside. The yarn twisting belt B is replaced with a new one when the surface rubber layer 1 reaches a limit of wear through friction with the yarns.

The surface rubber layer 1 may be formed from a synthetic rubber, selected from among urethane rubber (such as millable urethane rubber), nitrile rubber, chloroprene rubber, Hypalon®, polybutadiene rubber, ethylene-propylene copolymer (EPM), ethylene-propylene-diene copolymer (EPDM), hydrogenated nitrile rubber (H-NBR), hydrogenated nitrile rubber containing unsaturated metal carbonate added thereto, which may be used individually or in a combination of two more thereof. Hardness of the surface rubber layer 1 is preferably from 50 to 80 in JIS A scale, in order to suppress the decrease in yarn quality and the shortening of service life of the belt.

The reinforcing layer 2 has such a structure as the core layer 4 is interposed between the intermediate woven fabric 3 and the external woven fabric 5, which are integrated by adhering with a primer rubber. The primer rubber may be of the same kind as that of the surface rubber layer 1, or a different kind of rubber.

The core layer 4 is formed by embedding the core yarns 41 in the rubber 40, as shown in Fig. 1. The core yarns 41 may be made of, for example, one or more kind of polyester fiber, aramid fiber, glass fiber or the like having denier value of 1000 or less. The core yarns 41 are embedded so as to extend long in the direction of the belt circumference, with 20 or more yarns arranged per inch in the direction of the belt width.

The external woven fabric 5 is constituted by weaving, for example, polyester yarns (filament yarn). Polyester yarns may be used together with nylon yarn, aramid fiber, glass fiber, cotton yarn, meta aromatic polyamide yarn or the like. The external woven fabric 5 may also be constituted from nylon yarn, aramid fiber, glass fiber, cotton yarn, meta aromatic polyamide yarn or the like instead of polyester yarn. Thickness of the yarn is preferably in a range from 50 to 500 in denier value.

The intermediate woven fabric 3 is preferably constituted from seamless woven fabric that is elastic in the direction of the belt circumference and non-elastic (namely rigid) in the direction of the belt width. The seamless woven fabric can be made by, for example, weaving elastic yarns and non-elastic yarns into an endless loop of fabric so that the elastic yarns run in the direction of the belt circumference and the non-elastic yarns run.in the direction of the belt width. That is, either the elastic yarns or the non-elastic yarns are used as the warp and the other is used as the weft. However, it is not necessarily required that the warp or the weft is constituted from elastic yarns only or from the non-elastic yarns only. Rather, non-elastic yarns may be mixed into elastic yarns, or elastic yarns may be mixed into the non-elastic yarns, so as to achieve desired degree of elasticity or rigidity as a whole.

For the elastic yarn, elastic urethane yarn, nylon yarn, wooly yarn (wooly yarn made of nylon, wooly yarn made of polyethylene terephthalate, etc.), polybutylene terephthalate (PBT) yarn, polytrimethylene terephthalate (PTT) yarn, or the like that has high elasticity may be used. For the non-elastic yarn, a yarn similar to that of the external woven fabric 5 may be used. Both the elastic yarns and non-elastic yarns preferably have thickness from about 50 to 300 in denier value.

Now a process of manufacturing the yarn twisting belt B will be briefly described. A cylindrical die not shown in the drawing is covered with the external woven fabric 5 having a diameter a little smaller than the die that has been subjected to preliminary expansion. The external woven fabric 5 is lined with a primary rubber 40 on the core yarn side thereof. The core yarns 41 are placed on a woven fabric 9, which is then covered by the seamless intermediate woven fabric 3. The intermediate woven fabric 3 is lined with the primary rubber 40 on the core yarn side thereof, similarly to the above. Rubber is applied to the surface of the intermediate woven fabric 3 and vulcanized thereby to form the surface rubber layer 1. After forming the layer by vulcanization, the surface rubber layer 1 is polished on the surface to achieve predetermined surface roughness, as required. After polishing, the sheet is cut to a size of, for example, 8 mm in width, thereby completing the endless belt.

The intermediate woven fabric 3 according to this embodiment has high elasticity in direction of the belt circumference, so that it can be easily expanded to a larger diameter and overlaid over the core layer 4. Since the intermediate woven fabric shrinks after overlaying, it firmly holds onto the core layer 4, and does not allow the reinforcing layer 2 and the surface rubber layer 1 to depart from each other. This makes manufacturing very easy.

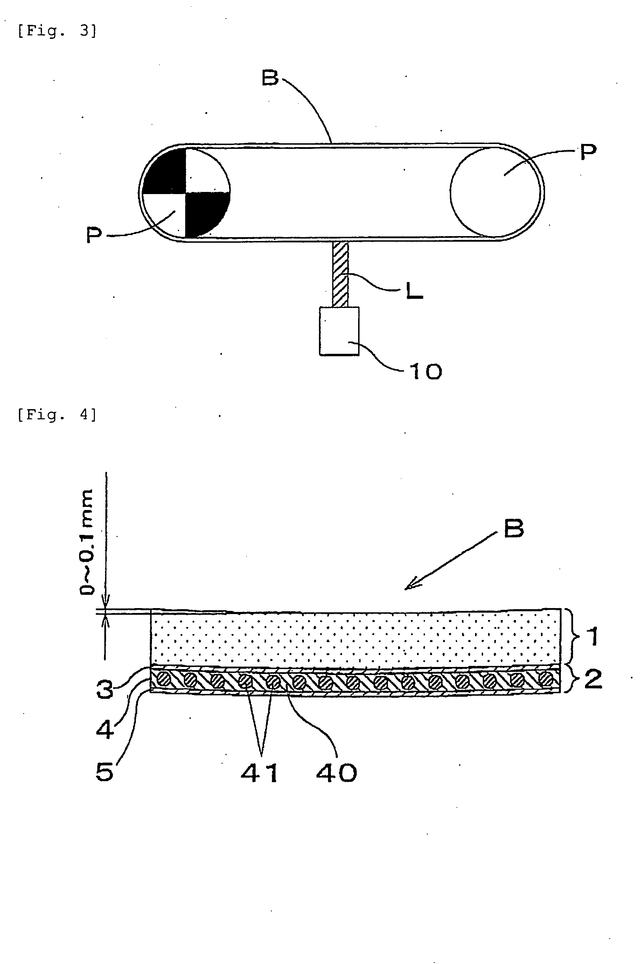

The yarn twisting belt B manufactured as described above is significantly restricted from warping in the direction of the belt width, since the intermediate woven fabric 3 is not expandable and has rigidity in the direction of the belt width. As a result, surface of the belt B is substantially flat or slightly warped in concave shape at the most. Seamless woven fabric warps in a concave shape such that the surface rubber layer shows 0 to 0.1 mm of warp, as shown in Fig. 4. Specifically, the ratio of the amount of warp to the belt width, (amount of warp)/(belt width), is preferably in a range from 0 to 0.0125. The amount of warp here refers to the difference in surface height between the edge and the center in direction of the belt width.

The yarn twisting belt B having the surface that is substantially flat or slightly warped is used in a twisting machine S as shown in Fig. 2. That is, as illustrated in Fig. 2, the belts B, B are arranged to cross each other and are drive to run by drive pulleys that rotate in opposite directions. The belts B, B run while nipping the yarn I, so as to move the yarn I in the direction of arrow toward downstream and apply twisting to the yarn, thereby untwisting the yarn I downstream that has been twisted upstream. The yarn I is introduced into between the belts B, B so as to proceed while being pressed between the surface rubber layers 1, 1 of the belts B, B.

Rigidity of the belts B, B in the direction of the belt width is increased so that the belt is suppressed from being warped, and is therefore capable of nipping the yarn I over a larger area of the belt, thus achieving stable nipping of the yarn I. As a result, uneven wear and scorching of the belt due to localized heating of the belts B, B are eliminated, service life of the belt B is elongated and quality of the twisted yarn I is stabilized.

Also use of the seamless woven fabric as the intermediate woven fabric 3 makes thickness of the belt uniform in the direction of the belt circumference, thereby making it possible to suppress the belt from vibrating when running, unlike in the case in which an intermediate woven fabric having seam is used, thus reducing the oscillation of yarns on the belt surface. As a result, uneven wear and scorching of the belt due to localized heating of the belt can be prevented from occurring, service life of the belt is elongated and quality of the twisted yarn can be stabilized.

Now the yarn twisting belt of the present invention will be described by way of Examples, although it is understood that the present invention is not limited to the Examples described below.

### [Example 1]

The yarn twisting belt B having the sectional structure shown in Fig. 1 was made according to the manufacturing process described previously, by using the following component members.
(1) Surface rubber layer 1: H-NBR
(2) Intermediate woven fabric 3 (seamless woven fabric)
   (direction of the belt circumference) Wooly nylon yarn 150 in denier
   (direction of the belt width) Polyethylene terephthalate filament yarn 150 in denier
(3) Core layer 4
   (Core yarn 41) Polyethylene terephthalate yarn 500 in denier (56 pieces arranged per 1 inch in the direction of the belt width)
(4) External woven fabric 5; Polyethylene terephthalate filament yarn 150 in denier
   The yarn twisting belt B thus made was cut to width of 8 mm.

### [Comparative Example 1]

The yarn twisting belt B was made similarly to Example 1, except for using, as the intermediate woven fabric 3, a seamed woven fabric that was woven by using polyethylene terephthalate filament yarn having denier value of 150.

### (Vibration test)

Maximum amplitude of vibration was measured with a testing apparatus shown in Fig. 3 on the yarn twisting belt B made in Example 1 and the yarn twisting belt made in Comparative Example 1.
The yarn twisting belt B was stretched between pulleys P, P under a spring load of 9 kgf and, with laser beam L irradiating the yarn twisting belt B at a mid portion of the stretch length, maximum amplitude and minimum amplitude of vibration were determined by means of a laser displacement meter 10. Then maximum amplitude was measured when the belt speed was increased from 0 to the maximum speed of 985 m/min.
The results are shown below.

**[Table 1]**

| | Intermediate woven fabric 3 | Maximum amplitude (mm) |
|---|---|---|
| Example 1 | Seamless woven fabric | 0.23 - 0.28 |
| Comparative Example 1 | Seamed woven fabric | 0.38 - 0.42 |

From these results, it can be seen that maximum amplitude of the yarn twisting belt of Example 1 was as small as 60% of that of Comparative Example 1, which indicates that vibration of the belt can be reduced by using the seamless woven fabric as the intermediate woven fabric 3.

### (Evaluation of twisting)

The yarn twisting belt B made in Example 1 showed the amount of warp, namely the difference in surface height between the edge and the center in the direction of the belt width, in a range from 0 to 0.1 mm. This is equivalent to the ratio of (amount of warp)/(belt width of 8 mm) in a range from 0 to 0.0125.
Twisting performance of the yarn twisting belt B made in Example 1 was evaluated using yarns of type 75d/36f, expansion rate of DR = 1.69 and yarn speed of YS = 860 m/min. It was verified that the surface rubber layer 1 underwent less wear while achieving stable quality of yarn and the belt endured 6 months of operation.

### [Comparative Example 2]

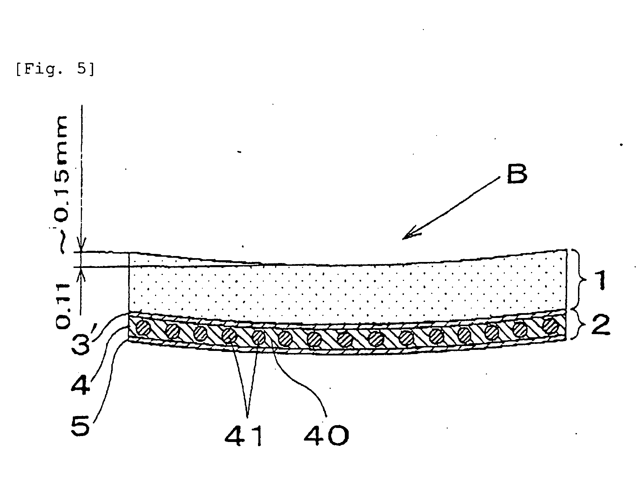

The yarn twisting belt having width of 8 mm was made similarly to Example 1, except for using a seamless knitted fabric 3' shown in Fig. 5 instead of the intermediate woven fabric 3. This belt was warped in concave shape on the external surface as shown in Fig. 5, with the amount of warp (difference in surface height between the edge and the center) in a range from 0.11 to 0.15 mm.
Twisting performance of the yarn twisting belt made in Comparative Example 2 was evaluated using yarns of type 75d/36f, expansion rate of DR = 1.52 and yarn speed of YS = 660 m/min. The yarns were often broken with much waste yarn generated, and the quality of yarn was poor.

The results described above prove that the yarn twisting belt B of Example 1 showed less wear of the surface rubber layer 1, more stable quality of yarn and longer service life of the belt than those of Comparative Examples 1 and 2.

While the yarn twisting belt of Examples described above are specified to show warp of the external surface in a range from 0 to 0.1 mm in concave shape with belt width of 8 mm, the present invention is not limited to this, since the amount of warp depends heavily on the width of the belt. Generally, it is preferable that the amount of warp is set in a range from 0 to 0.0125 mm. The width of the belt may be roughly in a range from 6 to 10 mm.

## Claims

1. A yarn twisting belt formed in an endless loop comprising a surface rubber layer that touches yarn to be twisted and a reinforcing layer that is laminated on the surface rubber layer, wherein an intermediate woven fabric is provided on the surface rubber layer side of the reinforcing layer, and the intermediate woven fabric is a seamless woven fabric.

2. The yarn twisting belt according to claim 1, wherein the reinforcing layer is constituted from the intermediate woven fabric that is the seamless woven fabric, a core layer having core yarns embedded therein in the longitudinal direction of the belt and an external woven fabric that touches pulleys, and is integrated with the surface rubber layer.

3. The yarn twisting belt according to claim 1 or 2, wherein the seamless woven fabric has elasticity in the direction of the belt circumference and rigidity in the direction of the belt width.

4. The yarn twisting belt according to claim 3, wherein the seamless woven fabric is constituted from elastic yarns and non-elastic yarns that are woven so that mostly elastic yarns run in the direction of the belt circumference and mostly non-elastic yarns run in the direction of the belt width.

5. The yarn twisting belt according to any one of claims 1 to 4, wherein the surface of the surface rubber layer warps in concave in a range from 0 to 0.1 mm.

6. The yarn twisting belt according to claim 5, wherein the ratio (amount of warp)/(belt width) is in a range from 0 to 0.0125.
